# EUROPÄISCHE PATENTANMELDUNG

(11) **EP 2 860 677 A1**
(43) Veröffentlichungstag der Anmeldung: **15.04.2015**
(21) Anmeldenummer: 14184292.2
(22) Anmeldetag: 10.09.2014
(51) Int. Cl.: G06Q 10/08, G07C 5/00

(54) **Identifikationssystem**

(30) Priorität: 19.09.2013 DE 102013218864
(71) Anmelder: ROBERT BOSCH GMBH, 70442 Stuttgart (DE)
(72) Erfinder: Winkel, Matthias, 76131 Karlsruhe (DE); Schneider, Klaus, 71640 Ludwigsburg (DE)

(57) **Zusammenfassung**

Ein Identifikationssystem (1) hat eine Speichervorrichtung (100), die zur Speicherung von Datensätzen (101, 102) ausgebildet ist, wobei jeder der Datensätze (101, 102) wenigstens ein erstes Identifikationselement (101 a, 102a) und wenigstens ein zweites Identifikationselement (101b, 102b) enthält; eine Diagnosevorrichtung (400), die ausgebildet ist, eine Untersuchung an einem Objekt (600) durchzuführen und als Ergebnis der Untersuchung wenigstens einen Diagnoseidentifikator bereitzustellen; eine Objektidentifikationsvorrichtung (300), die ausgebildet ist, den Typ des Objekts (600) zu identifizieren und einen dem Objekttyp zugeordneten Objektidentifikator bereitzustellen; und eine Vergleichs- und Auswahlvorrichtung (200), die ausgebildet ist:
den von der Objektidentifikationsvorrichtung bereitgestellten Objektidentifikator mit den ersten Identifikationselementen (101a, 102a) der in der Datenbank (100) gespeicherten Datensätze (101, 102) zu vergleichen;
den wenigstens einen von der Diagnosevorrichtung bereitgestellten Diagnoseidentifikator (410) mit den zweiten Identifikationselement (101 b, 102b) der in der Datenbank (100) gespeicherten Datensätze (101, 102) zu vergleichen; und diejenigen Datensätze (101, 102) auszuwählen, die wenigstens ein erstes Identifikationselement (101 a, 102a) enthalten, das mit dem von der Objektidentifikationsvorrichtung zur Verfügung gestellten Objektidentifikator übereinstimmt, und die wenigstens ein zweites Identifikationselement (101 b, 102b) enthalten, das mit dem von der Diagnosevorrichtung zur Verfügung gestellten Diagnoseidentifikator (410) übereinstimmt.

## Beschreibung

Die Erfindung betrifft ein Identifikationssystem und ein Verfahren, insbesondere zum Einsatz im Kfz-Werkstattbereich, die es ermöglichen, automatisch eine Identifikation und -diagnose eines Objektes, insbesondere eine Fahrzeugs, durchzuführen, um auf der Basis automatisch bestimmter Objekt- und Diagnosedaten passende Ersatzteile zu bestellen.

### Stand der Technik

Sowohl zur Fahrzeugdiagnose als auch zur Bestellung von Ersatzteilen, die zur Fahrzeugreparatur benötigt werden, sind im Werkstattbereich häufig elektronische Systeme im Einsatz. Diese Systeme stehen jedoch bislang unverbunden nebeneinander.

Auch wenn die bei der Fahrzeugdiagnose und bei der Ersatzteilbestellung verwendeten Begriffe oft sehr ähnlich sind, bezeichnen sie häufig unterschiedliche Dinge in unterschiedlichen Kontexten. In der Welt der Fahrzeugdiagnose werden die Begriffe unter dem funktionalen Aspekt benutzt, defekte Funktionen und Komponenten des Fahrzeugs zu beschreiben. In der Welt der Produkte und Ersatzteile ist es jedoch notwendig, das konkrete Produkt bzw. Bauteil exakt zu beschreiben und zu benennen, um z. B. eine Ersatzteilbestellung durchführen zu können.

Typischerweise verwendet der Nutzer für die Fahrzeugdiagnose eine Diagnose-Software auf einem PC oder ein Diagnosegerät mit darauf installierter Diagnose-Software. Dabei werden insbesondere Fehlerspeicher des Fahrzeugs ausgelesen und Prüfabläufe abgerufen und durchgeführt, um Fehler einzugrenzen und/oder zu identifizieren.

Wenn ein auf diese Weise identifizierter Fehler in Verbindung mit einer oder mehreren defekten Komponenten des Fahrzeugs steht, sucht ein Mitarbeiter in der Werkstatt die notwendigen Ersatzteile aus den Katalogen der Lieferanten, die seine Werkstatt beliefern, heraus und bestellt diese telefonisch, schriftlich und/oder über ein Online-Portal des Lieferanten.

Bei der Auswahl der richtigen Ersatzteile berücksichtigt der Mitarbeiter neben dem Diagnoseergebnis auch die Fahrzeugdaten des Fahrzeugs, an dem die Untersuchung durchgeführt worden ist. Weitere Entscheidungskriterien, die gegebenenfalls herangezogen werden, sind die Verfügbarkeit des Ersatzteils beim Händler, der mögliche Lieferzeitpunkt und der Preis.

### Offenbarung der Erfindung

Eine Aufgabe der vorliegenden Erfindung ist es, die Identifikation und Bestellung von Ersatzteilen, die zur Reparatur eines Objekts, insbesondere eines Fahrzeugs, benötigt werden, zu vereinfachen und zu beschleunigen.

Diese Aufgabe wird durch ein erfindungsgemäßes Identifikationssystem nach dem unabhängigen Patentanspruch 1 und ein erfindungsgemäßes Verfahren nach dem unabhängigen Patentanspruch 13 gelöst. Die abhängigen Patentansprüche definieren vorteilhafte Weiterbildungen eines erfindungsgemäßen Identifikationssystem und eines erfindungsgemäßen Verfahrens.

Ein erfindungsgemäßes Identifikationssystem hat eine Speichervorrichtung, eine Diagnosevorrichtung, eine Objektidentifikationsvorrichtung und eine Vergleichs-und Auswahlvorrichtung.

Die Speichervorrichtung ist zur Speicherung von Datensätzen ausgebildet, wobei jeder der Datensätze wenigstens ein erstes Identifikationselement, das auch als Objektidentifikationselement bezeichnet wird, und wenigstens ein zweites Identifikationselement, das auch als Diagnoseidentifikationselement bezeichnet wird, umfasst.

Die Diagnosevorrichtung ist ausgebildet, eine Untersuchung an einem Objekt durchzuführen und als Ergebnis der Untersuchung wenigstens einen Diagnoseidentifikator bereitzustellen.

Die Objektidentifikationsvorrichtung ist ausgebildet, das Objekt, insbesondere einen Typ des Objekts, beispielsweise den Fahrzeugtyp eines untersuchten Fahrzeugs, zu identifizieren und einen dem Objekttyp zugeordneten Objektidentifikator bereitzustellen.

Die Vergleichs- und Auswahlvorrichtung ist ausgebildet,
a) den von der Objektidentifikationsvorrichtung bereitgestellten Objektidentifikator mit den ersten Identifikationselementen (Objektidentifikationselementen) der in der Datenbank gespeicherten Datensätze zu vergleichen;
b) den wenigstens einen von der Diagnosevorrichtung bereitgestellten Diagnoseidentifikator mit den zweiten Identifikationselementen (Diagnoseidentifikationselementen) der in der Datenbank gespeicherten Datensätze zu vergleichen; und
c) diejenigen Datensätze auszuwählen, die
   c1) wenigstens ein erstes Identifikationselement enthalten, das mit dem von der Objektidentifikationsvorrichtung zur Verfügung gestellten Objektidentifikator übereinstimmt, und die
   c2) wenigstens ein zweites Identifikationselement enthalten, das mit dem von der Diagnosevorrichtung zur Verfügung gestellten Diagnoseidentifikator übereinstimmt.

Ein Verfahren zum Auswählen von Daten aus einer Speichervorrichtung eines Identifikationssystems, die Datensätze enthält, wobei jeder der Datensätze wenigstens ein erstes Identifikationselement und wenigstens ein zweites Identifikationselement enthält, umfasst die Schritte:
Identifizieren eines Objekts, insbesondere des Typs eines Objekts und Bereitstellen eines dem identifizierten Objekt zugeordneten Objektidentifikators;
Durchführen einer Untersuchung an einem Objekt und Bereitstellen wenigstens eines einem Ergebnis der Untersuchung zugeordneten Diagnoseidentifikators; Vergleichen des zur Verfügung gestellten Objektidentifikators mit den ersten Identifikationselementen der in der Datenbank gespeicherten Datensätze, und des wenigstens einen zur Verfügung gestellten Diagnoseidentifikators mit den zweiten Identifikationselementen der in der Datenbank gespeicherten Datensätze und
Auswählen von Datensätzen, die
   wenigstens ein erstes Identifikationselement enthalten, das mit dem zur Verfügung gestellten Objektidentifikator übereinstimmt, und die
   wenigstens ein zweites Identifikationselement enthalten, das mit dem zur Verfügung gestellten Diagnoseidentifikator übereinstimmt.

Die Erfindung ermöglicht es, die für die Reparatur des Objekts benötigten Komponenten aufgrund der Informationen, die von der Objektidentifikationsvorrichtung und der Diagnosevorrichtung zur Verfügung gestellt werden, automatisch, d.h. ohne dass von einem Nutzer des Identifikationssystems zusätzlich manuelle Arbeitsschritte durchgeführt werden müssen, und ohne Medienbruch zu identifizieren.

Die Reparatur und insbesondere die Bestellung von Ersatzteilen, die für die Reparatur des Objekts benötigt werden, können auf diese Weise optimiert, insbesondere vereinfacht und beschleunigt werden. Fehler, wie sie bei der bisher üblichen manuellen Identifizierung und Bestellung der benötigten Ersatzteile leicht auftreten können, z.B. weil der Objekttyp und/oder Bestellnummern verwechselt oder fehlerhaft übertragen werden, können auf diese Weise zuverlässig vermieden werden.

In einer Ausführungsform weist das Identifikationssystem zusätzlich eine Übertragungsvorrichtung auf, die ausgebildet ist, Daten aus wenigstens einem der von der Vergleichs- und Auswahlvorrichtung ausgewählten Datensätze an wenigstens einen externen Server zu übertragen. Auf diese Weise können die durch die ausgewählten Datensätze identifizierten Komponenten bzw. Ersatzteile automatisch bestellt werden, indem Daten aus den ausgewählten Datensätzen, welche die benötigten Komponenten bzw. Ersatzteile identifizieren, an den Server eines Lieferanten bzw. Herstellers übertragen werden. Fehler, die bei einer manuellen Bestellung durch Übertragungsfehler beim manuellen Übertragen der Daten auftreten können, können so zuverlässig vermieden werden.

In einer Ausführungsform weist das Identifikationssystem zusätzlich eine Übertragungs-Auslösevorrichtung auf, und die Übertragungsvorrichtung ist so ausgebildet, dass eine Übertragung von Daten aus den ausgewählten Datensätzen an wenigstens einen externen Server durch Betätigen der Übertragungs-Auslösevorrichtung auslösbar ist. Die Daten können so gezielt übertragen werden, um beispielsweise eine Bestellung aufzugeben; und eine unbeabsichtigte Datenübertragung, die eine unerwünschte Bestellung zur Folge haben würde, kann vermieden werden.

In einer Ausführungsform ist die Übertragungsvorrichtung ausgebildet, die Daten über das Internet, insbesondere unter Benutzung des http- und/oder https-Protokolls, an den externen Server zu übertragen. Das Internet und insbesondere eine Verbindung, die das http- und/oder das https-Protokoll nutzt, ermöglichen eine preisgünstige und zuverlässige Übertragung der Daten. Das https-Protokoll ermöglicht es, die Daten sicher, insbesondere verschlüsselt, zu übertragen, um ein Ausspähen und/oder Verfälschen der Daten durch unbefugte Dritte zu verhindern.

In einer Ausführungsform umfasst die Speichervorrichtung mehrere Speicher-Teilbereiche und die Vergleichs- und Auswahlvorrichtung ist konfigurierbar, Datensätze nur aus einem oder mehreren ausgewählten der Speicher-Teil-bereiche auszuwählen. Die Speicher-Teilbereiche können beispielsweise verschiedenen Herstellern, Objekttypen und/oder Lieferanten zugeordnet sein, und durch die Auswahl eines oder mehrerer Speicher-Teilbereiche kann die Auswahl der Komponenten auf einen oder mehrere vorgegebene Hersteller, Objekttypen und/oder Lieferanten beschränkt werden. Auf diese Weise kann der Vorgang des Auswählens einer Komponente beschleunigt werden, da nicht alle in der Speichervorrichtung gespeicherten Datensätze, sondern nur die Datensätze, die in dem oder den ausgewählten Teilbereich(en) gespeichert sind, ausgewertet werden müssen.

In einer Ausführungsform weist das Identifikationssystem eine zusätzliche Speichervorrichtung und/oder einen zusätzlichen Speicherbereich auf und die Übertragungsvorrichtung ist ausgebildet, Daten von wenigstens einem externen Server abzurufen und in der zusätzlichen Speichervorrichtung und/oder in dem zusätzlichen Speicherbereich zu speichern. Auf diese Weise stehen die von dem wenigstens einem externen Server abgerufenen Daten lokal im Informationssystem zur Verfügung und können besonders schnell ausgewertet werden, z.B. um einen geeigneten Lieferanten für eine benötigte Komponente zu identifizieren. Insbesondere ist es nicht notwendig, zunächst eine externe (Internet-) Verbindung zu wenigstens einem externen Server aufzubauen. Zeit- und kostenaufwendige Anfragen an die externen Server von Lieferanten, die für die Lieferung einer benötigten Komponente nicht in Frage kommen, können so vermieden werden.

Die von der Eingangsvorrichtung der Objektidentifikationsvorrichtung erfassten Objektidentifikationsmerkmale können mit Hilfe eines sogenannten "Datenbank-Mappings" verarbeitet werden.

Das "Datenbank-Mapping" kann hierbei auf zwei verschiedene Arten erfolgen und wird im Folgenden am Beispiel einer Fahrzeugidentifikation beschrieben:
Beim "Schlüssel-zu-Schlüssel-Mapping" wird jeder Fahrzeugidentifikator eines ersten Fahrzeug-Identifizierungssystems, beispielsweise des BOSCH-Fahrzeug-Identifzierungssystems, auf einen oder mehrere Fahrzeugidentifikatoren wenigstens eines zweiten Fahrzeug-Identifizierungssystems, beispielsweise des TecDoc Fahrzeug-Identifizierungssystems oder eines hersteller- oder landesspezifischen Identifizierungssystems abgebildet. Ist eine solche Abbildung nicht eindeutig möglich, da die zur Verfügung stehenden Informationen mehrdeutig sind, werden von der Eingangsvorrichtung solange zusätzliche Daten angefordert, bis aufgrund der vorhandenen Daten eine eindeutige Zuordnung möglich ist und/oder der Nutzer wird aufgefordert, die Zuordnung manuell vorzunehmen.

Für das "Schlüssel-zu-Schlüssel-Mapping" umfasst die Fahrzeugidentifikationsvorrichtung einen Zuordnungsspeicher (Fahrzeugschlüsselspeicher), in dem erste Einträge (Fahrzeugschlüssel eines ersten Fahrzeugschlüsselsystems) und zweite Einträge (Fahrzeugschlüssel eines zweiten Fahrzeugschlüsselsystems) gespeichert sind, wobei jeder der zweiten Einträge wenigstens einem ersten Eintrag zugeordnet ist. Die Fahrzeugidentifikationsvorrichtung umfasst darüber hinaus eine Aufnahmevorrichtung, die ausgebildet ist, Eingangswerte aufzunehmen, und eine Fahrzeugidentifikationsvergleichs- und auswahlvorrichtung, die ausgebildet ist, die von der Aufnahmevorrichtung aufgenommenen Eingangswerte mit den ersten Einträgen im Zuordnungsspeicher zu vergleichen und zweite Einträge auszuwählen und als Fahrzeugidentifikator zur Verfügung zu stellen, die ersten Einträgen zugeordnet sind, die mit wenigstens einem der Eingangswerte übereinstimmen.

Ein derartiger Zuordnungsspeicher ermöglicht es, Fahrzeugidentifikatoren (Fahrzeugschlüssel) unterschiedlicher Fahrzeug-Identifizierungssysteme, die auf unterschiedlichen Fahrzeugidentifikationsmerkmalen, wie z.B. der KBA-Nummer, dem TecDoc K/N-Typ, dem BOSCH-Schlüssel, der Fahrgestellnummer (VIN), usw. basieren, aufeinander abzubilden und/oder miteinander zu verknüpfen.

In einer Ausführungsform sind in dem Zuordnungsspeicher zusätzlich zu den ersten und zweiten Einträgen Fahrzeugschlüssel eines dritten Fahrzeugschlüsselsystems als dritte Einträge gespeichert, wobei jeder der ersten Einträge mit jeweils wenigstens einem der zweiten Einträge und mit jeweils wenigstens einem der dritten Einträge verknüpft ist. Die Fahrzeugidentifikationsvergleichs- und auswahlvorrichtung ist ausgebildet, die von der Aufnahmevorrichtung empfangenen Eingangswerte mit den ersten Einträgen im Zuordnungsspeicher zu vergleichen und zweite und/oder dritte Einträge, die mit wenigstens einem der ersten Einträge verknüpft sind, der mit wenigstens einem der Eingangswerte übereinstimmt, auszuwählen und als Fahrzeugidentifikatoren zur Verfügung zu stellen.

Alternativ, insbesondere wenn kein Fahrzeugschlüssel eines ersten Fahrzeug-Identifizierungssystems vorhanden und/oder bekannt ist, kann die Zuordnung mit Hilfe eines sogenannten "Merkmal-zu-Merkmal-Mappings" erfolgen. Dabei werden bekannte Merkmale des zu untersuchenden Fahrzeugs, beispielsweise der Hersteller, das Modell/der Typ, die Kraftstoffart (insbesondere Diesel, Benzin, Gas, Strom), der Hubraum und/oder die Motorleistung mit Merkmalen verglichen, die den Fahrzeugidentifikatoren eines Fahrzeug-Identifizierungssystems zugeordnet sind, und es werden diejenigen Fahrzeugidentifikatoren ausgewählt, welche die größte Übereinstimmung an Merkmalen aufweisen und/oder die eine vorgegebene Mindestanzahl übereinstimmender Merkmale aufweisen.

Wenigstens ein Merkmal kann als sogenanntes KO-Merkmal definiert sein, dessen Nicht-Übereinstimmen die Auswahl eines Fahrzeugidentifikators ausschließt, selbst wenn für eine große Anzahl anderer Merkmale eine Übereinstimmung festgestellt wird.

Für das "Merkmal-zu-Merkmal-Mapping" weist die Fahrzeugidentifikationsvorrichtung einen Zuordnungsspeicher, in dem Datensätze mit Einträgen gespeichert sind, eine Aufnahmevorrichtung, die ausgebildet ist, Eingangswerte zu empfangen, und eine Fahrzeugidentifikationsvergleichs- und auswahlvorrichtung auf, die ausgebildet ist, von der Aufnahmevorrichtung empfangene Eingangswerte mit den Einträgen in den im Zuordnungsspeicher gespeicherten Datensätze zu vergleichen, diejenigen Datensätze auszuwählen, welche die meisten Einträge aufweisen, die mit den empfangenen Eingangswerten übereinstimmen, und Einträge der ausgewählten Datensätze als Fahrzeugidentifikator zur Verfügung zu stellen.

Werden auf diese Weise zwei oder mehr Fahrzeugidentifikatoren ausgewählt, können von der Aufnahmevorrichtung solange weitere Daten (Merkmale) angefordert werden, bis eine eindeutige Zuordnung möglich ist.

Alternativ können dem Nutzer des Identifikationssystems alle aufgrund der vorliegenden Informationen ausgewählten Fahrzeugidentifikatoren angezeigt werden und der Nutzer kann aufgefordert wählen, einen der angezeigten Fahrzeugidentifikatoren auszuwählen.

In einem erfindungsgemäßen Identifikationssystem können auch beide beschriebenen Arten des "Datenbank-Mappings" implementiert sein, um es dem System und/oder dem Nutzer zu ermöglichen, die im konkreten Fall jeweils am besten geeignete Methode auszuwählen und anzuwenden. Welche Methode des "Datenbank-Mappings" im konkreten Fall besser geeignet ist, hängt von der Systematik des jeweiligen Identifizierungssystems und den Informationen ab, die über das zu untersuchende Kraftfahrzeug zur Verfügung stehen.

Da die von der Objektidentifikationsvorrichtung erfassten Merkmale zum Identifizieren des untersuchten Objektes können auf einen gemeinsamen internen Objektidentifikator abgebildet werden, können die Identifikationsmerkmale, die von der Objektidentifikationsvorrichtung zur Verfügung gestellt werden, in jedes beliebige Identifizierungssystem überführt werden.

Dabei ist zu berücksichtigen, dass die Identifizierungssysteme eine unterschiedliche Qualität und/oder Granularität aufweisen können, so dass das Abbilden ("Mappen") mehrdeutige Beziehungen beinhalten kann. Das bedeutet, dass ein Identifikator eines ersten Identifikationssystems auf mehrere andere Identifikatoren eines zweiten Identifikationssystems abgebildet sein kann. In einem solchen Fall muss gegebenenfalls eine Nachidentifikation des Objekts vorgenommen werden, indem so lange weitere Merkmale abfragt werden, bis im Zielidentifikationssystem ein eindeutiger Objektidentifikator ermittelbar ist.

In einer Ausführungsform weist das Identifikationssystem zusätzlich eine Anzeigevorrichtung auf, die ausgebildet ist, Daten aus Datensätzen, die von der Vergleichs- und Auswahlvorrichtung ausgewählt worden sind, anzuzeigen. Dies ermöglicht es dem Benutzer, die ausgewählten Datensätze anzusehen, zu überprüfen und die Auswahl der Datensätze zu überwachen.

In einer Ausführungsform weist das Identifikationssystem zusätzlich eine Eingabevorrichtung auf, die ausgebildet ist, wenigstens eine Eingabe eines Benutzers entgegen zu nehmen und an die Vergleichs- und Auswahlvorrichtung weiterzugeben, insbesondere um es dem Nutzer zu ermöglichen, die Auswahl der Datensätze zu beeinflussen. Insbesondere kann die Vergleichs- und Auswahlvorrichtung so ausgebildet sein, dass sie es dem Nutzer ermöglicht, in einem Fall, in dem von der Vergleichs- und Auswahlvorrichtung mehrere Datensätze ausgewählt worden sind, die erste und zweite Einträge enthalten, die jeweils mit dem Objektidentifikator und dem Diagnoseidentifikator übereinstimmen, durch eine Eingabe, die von der Eingabevorrichtung entgegen genommen wird, wenigstens einen aus den zuvor ausgewählten Datensätzen manuell auszuwählen.

### Figurenbeschreibung

Die Erfindung wird im Folgenden anhand der beigefügten Figuren näher erläutert:
Figur 1 zeigt eine schematische Darstellung eines Ausführungsbeispiels eines erfindungsgemäßen Identifikationssystems.
Figur 2 zeigt eine schematische Darstellung eines Ausführungsbeispiels eines Zuordnungsspeichers einer Objektidentifikationsvorrichtung eines erfindungsgemäßen Identifikationssystems.
Figur 3 zeigt eine schematische Darstellung eines weiteren Ausführungsbeispiels eines Zuordnungsspeichers einer Objektidentifikationsvorrichtung eines erfindungsgemäßen Identifikationssystems.

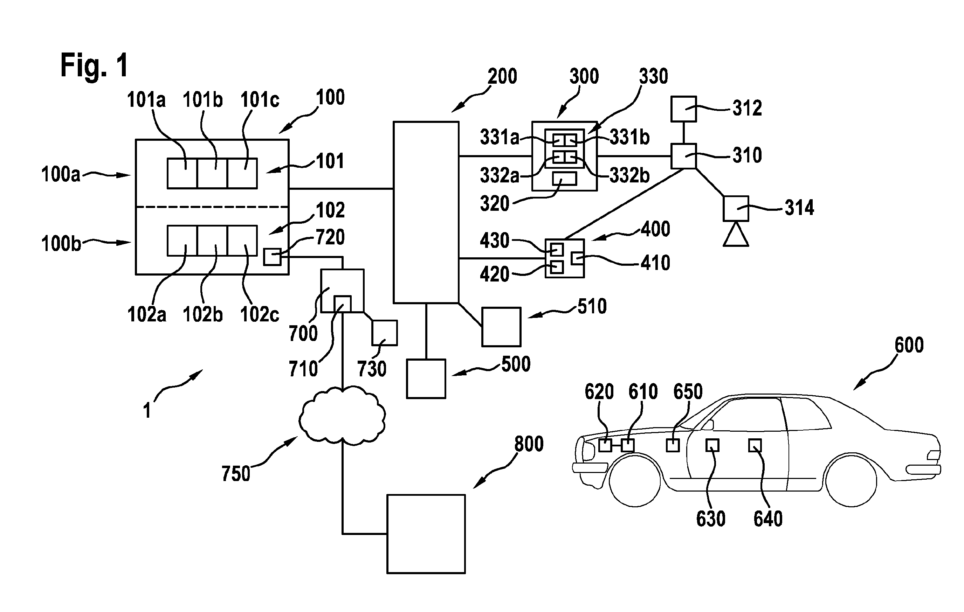

Die Figur 1 zeigt eine schematische Darstellung eines Ausführungsbeispiels eines erfindungsgemäßen Identifikationssystems 1 am Beispiel eines im Kfz-Werkstattbereich eingesetzten Werkstatt-Identifikationssystems 1.

Das Identifikationssystem 1 umfasst in dem in der Figur 1 gezeigten Ausführungsbeispiel eine Speichervorrichtung 100, die zur Speicherung von Datensätzen 101, 102 ausgebildet ist. Jeder der gespeicherten Datensätze 101, 102 umfasst wenigstens ein erstes Identifikationselement ("Fahrzeugidentifikationselement") 101 a, 102a, das einen Fahrzeugtyp identifiziert, wenigstens ein zweites Identifikationselement ("Diagnoseidentifikationselement") 101 b, 102b, das jeweils einem Fahrzeug-Diagnoseergebnis zugeordnet ist, und wenigstens ein drittes Identifikationselement ("Komponentenidentifikationselement") 101c, 102c, das jeweils eine Komponente 630, 640 eines Fahrzeugs 600, wie beispielsweise eine Batterie 630, eine Lichtmaschine 640, eine (nicht in der Figur gezeigte) Zündkerze usw. identifiziert.

Das Identifikationssystem 1 umfasst auch eine Diagnosevorrichtung 400 mit einer Diagnoseschnittstelle 410, die ausgebildet ist, drahtlos oder drahtgebunden, insbesondere über eine an einem Fahrzeug 600 ausgebildete OBD-Buchse 620, mit einem Fahrzeug-Steuergerät 610 in Verbindung zu treten, um Daten mit dem Fahrzeug-Steuergerät 610 auszutauschen und dabei insbesondere Daten aus dem Fahrzeug-Steuergerät 610 auszulesen, anhand der ausgelesenen Daten eine Fahrzeugdiagnose durchzuführen und wenigstens einen Diagnoseidentifikator bereitzustellen, der einem Ergebnis der Fahrzeugdiagnose zugeordnet ist und mögliche Fehler einschließlich defekter Komponenten 630, 640 des Fahrzeugs 600, die Ursache des diagnostizierten Fehlers sein können, identifiziert.

Das Identifikationssystem 1 umfasst auch eine Fahrzeugidentifikationsvorrichtung 300, die ausgebildet ist, den Fahrzeugtyp des Fahrzeugs 600 zu identifizieren und einen dem identifizierten Fahrzeugtyp zugeordneten Fahrzeugidentifikator bereitzustellen. Dazu hat die Fahrzeugidentifikationsvorrichtung 300 eine Aufnahmevorrichtung 310, die ausgebildet ist, Eingangswerte entgegen zu nehmen. Die Aufnahmevorrichtung 310 kann beispielsweise Eingangswerte von der Diagnosevorrichtung 400 aufnehmen, die diese aus dem Fahrzeug-Steuergerät 610 ausgelesen hat. Die Aufnahmevorrichtung 310 kann auch eine manuelle Eingabevorrichtung, beispielsweise eine Tastatur oder einen Touchscreen 312 aufweisen, die es ermöglicht, Daten, z.B. eine Fahrzeugidentifikationsnummer, manuell in die Fahrzeugidentifikationsvorrichtung 300 einzugeben. Alternativ oder zusätzlich kann die Aufnahmevorrichtung 310 auch eine optische Eingabe- und/oder Aufnahmevorrichtung 314, beispielsweise eine Kamera und/oder eine Barcodeleser umfassen, die ausgebildet ist, optische Merkmale des Fahrzeugs 600, beispielsweise die Form eines charakteristischen Teils oder der gesamten Karosserie des Fahrzeugs 600, das Kennzeichen des Fahrzeugs 600 und/oder einen am Fahrzeug 600 angebrachten Barcode 650 zu erfassen und der Fahrzeugidentifikationsvorrichtung 300 zur Verfügung zu stellen, um das Fahrzeug 600 zu identifizieren.

In dem in der Figur 1 gezeigten Ausführungsbeispiel umfasst die Fahrzeugidentifikationsvorrichtung 300 insbesondere einen Zuordnungsspeicher 330, in dem erste Einträgen 331a, 332a und zweite Einträgen 331b, 332b gespeichert sind, wobei jeder der zweiten Einträge 331 b, 332b mit wenigstens einem der ersten Einträge 331a, 332a verknüpft ist, und eine Fahrzeugidentifikationsvergleichs- und auswahlvorrichtung 320, die ausgebildet ist, die von der Aufnahmevorrichtung 310 empfangenen Eingangswerte mit den ersten Einträgen 331a, 332a, die in dem Zuordnungsspeicher 330 gespeichert sind, zu vergleichen und zweite Einträge 331 b, 332b, die mit den ersten Einträgen 331 a, 332a, die mit wenigstens einem der Eingangswerte übereinstimmen, verknüpft sind, auszuwählen und als Fahrzeugidentifikator bereitzustellen.

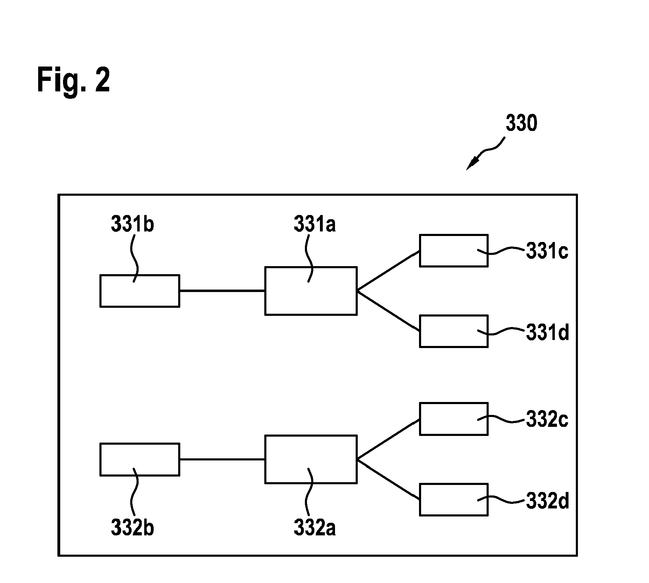

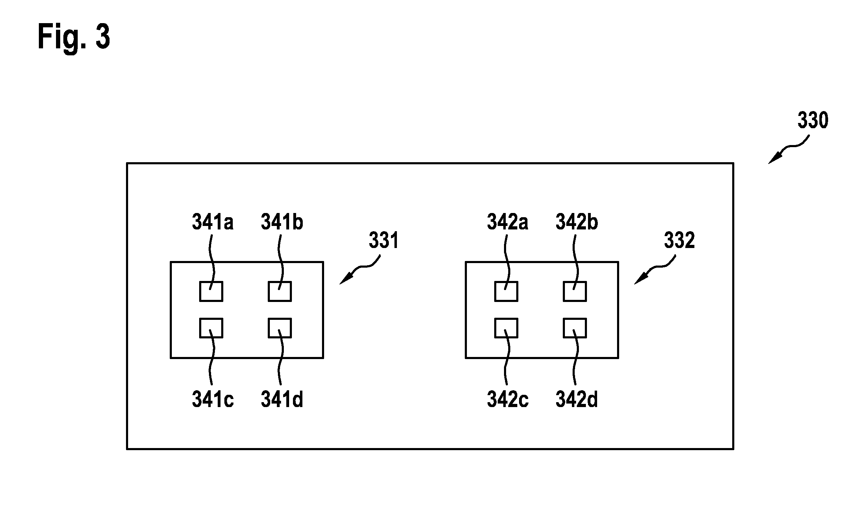

Ein derartiger Zuordnungsspeicher 330 ermöglicht es, Fahrzeugidentifikatoren (Fahrzeugschlüssel) unterschiedlicher Fahrzeug-Identifizierungssysteme, die auf unterschiedlichen Fahrzeugidentifikationsmerkmalen, wie z.B. der KBA-Nummer, dem TecDoc K/N-Typ, der Fahrgestellnummer ("Vehicle Identification Number", VIN), dem BOSCH-Schlüssel usw. basieren, aufeinander abzubilden und/oder miteinander zu verknüpfen. Dazu kann der Zuordnungsspeicher 330 ggf. weitere (dritte, vierte, usw.) Einträge aufweisen, die jeweils einem weiteren Fahrzeug-Identifizierungssystem zugeordnet sind. Alternative Ausführungsbeispiele des Zuordnungsspeichers 330 werden weiter unten im Zusammenhang mit den Figuren 2 und 3 beschrieben.

Das Identifikationssystem 1 umfasst auch eine Vergleichs- und Auswahlvorrichtung 200, die ausgebildet ist, den von der Fahrzeugidentifikationsvorrichtung 300 bereitgestellten Fahrzeugidentifikator mit den ersten Identifikationselementen 101 a, 102a, die in den in der Speichervorrichtung 100 gespeicherten Datensätzen 101, 102 enthalten sind, zu vergleichen und den wenigstens einen von der Diagnosevorrichtung 400 bereitgestellten Diagnoseidentifikator 410 mit den zweiten Identifikationselementen 101b, 102b, die in den in der Datenbank 100 gespeicherten Datensätze 101, 102 gespeichert sind, zu vergleichen und diejenigen aus den in der Speichervorrichtung 100 gespeicherten Datensätzen 101, 102 auszuwählen, die zum einen wenigstens ein erstes Identifikationselement 101 a, 102a enthalten, das mit dem von der Fahrzeugidentifikationsvorrichtung 300 zur Verfügung gestellten Fahrzeugidentifikator übereinstimmt, und die darüber hinaus wenigstens ein zweites Identifikationselement 101b, 102b enthalten, das mit dem von der Diagnosevorrichtung 400 zur Verfügung gestellten Diagnoseidentifikator übereinstimmt.

Informationen aus den auf diese Weise von der Vergleichs- und Auswahlvorrichtung 200 ausgewählten Datensätzen 101, 102, insbesondere in den ausgewählten Datensätzen 101, 102 enthaltene dritte Identifikationselemente 101c, 102c, die Komponenten 630, 640 des Fahrzeugs 600 bezeichnen, die aufgrund des Diagnoseergebnisses als möglicherweise defekt einzustufen sind, können auf einer Ausgabevorrichtung 500 (z.B. einem Bildschirm oder einem Drucker) und/oder einer in die Diagnosevorrichtung 400 integrierten Anzeigevorrichtung 420 angezeigt werden.

Die Speichervorrichtung 100 kann mehrere Speicher-Teilbereiche 100a, 100b umfassen, und die Vergleichs- und Auswahlvorrichtung 200 kann konfigurierbar sein, den Vergleich mit dem von der Fahrzeugidentifikationsvorrichtung 300 bereitgestellten Fahrzeugidentifikator und dem wenigstens einen von der Diagnosevorrichtung 400 bereitgestellten Diagnoseidentifikator nur für diejenigen Datensätze 101, 102 durchzuführen, die in einem ausgewählten Teilbereich 100a, 100b der Speichervorrichtung 100 gespeichert sind, so dass nur Datensätze 101, 102 aus dem einem oder mehreren ausgewählten Speicher-Teilbereiche(n) 100a, 100b ausgewählt werden können.

Die Speicher-Teilbereiche 100a, 100b können beispielsweise verschiedenen Fahrzeug-Herstellern, Fahrzeugtypen und/oder Lieferanten zugeordnet sein, und durch die Auswahl eines oder mehrerer Speicher-Teilbereiche 100a, 100b kann die Auswahl der Komponenten 630, 640 auf einen oder mehrere vorgegebene Fahrzeugtypen, Hersteller und/oder einen oder mehrere Lieferanten beschränkt werden. Auf diese Weise kann der Vorgang des Vergleichens und Auswählens beschleunigt werden, da nicht alle in der Speichervorrichtung 100 gespeicherten Datensätze 101, 102, sondern nur die Datensätze 101, 102, die in dem bzw. in den ausgewählten Teilbereich(en) 100a, 100b gespeichert sind, ausgewertet und verglichen werden müssen.

Über eine Eingabevorrichtung 430, 510, die funktional mit der Vergleichs- und Auswahlvorrichtung 200 verbunden ist und die in die Diagnosevorrichtung 400 integriert sein kann, kann ein Benutzer des Identifikationssystems 1 einen oder mehrere der angezeigten Datensätze 101, 102 auswählen und insbesondere veranlassen, dass eine Komponenten-Bestellvorrichtung 700, die ebenfalls Teil des Identifikationssystems 1 ist und die funktional mit der Vergleichs- und Auswahlvorrichtung 200 verbunden ist, mit Hilfe einer Übertragungsvorrichtung 710 Informationen aus den ausgewählten Datensätzen 101, 102, insbesondere dritte Identifikationselemente 101c, 102c, die Komponenten 630, 640 des Fahrzeugs 600 eindeutig bezeichnen, an wenigstens einen externen Server 800, der insbesondere bei einem Lieferanten von Fahrzeugkomponenten 630, 640 installiert sein kann, überträgt, um abzufragen, ob, wann und/oder zu welchem Preis die durch ein drittes Identifikationselement 101c, 102c bezeichnete Fahrzeugkomponente 630, 640 lieferbar ist, und ggf. eine Bestellung vorzunehmen, um eine Lieferung der ausgewählten Fahrzeugkomponente 630, 640 zu veranlassen.

Die Komponenten-Bestellvorrichtung 700 kann insbesondere über das Internet 750 mit einem oder mehreren Servern 800 verbindbar sein, um die Lieferbarkeit, Lieferzeiten und/oder Preise verschiedener Lieferanten abzufragen und auf der Ausgabevorrichtung 500 und/oder einer in die Diagnosevorrichtung 400 integrierten Anzeigevorrichtung 420 anzuzeigen, um es dem Nutzer auf diese Weise zu ermöglichen, die benötigten Komponenten 630, 640 beim jeweils günstigsten und/oder am schnellsten liefernden Lieferanten zu bestellen.

Der mögliche Lieferzeitpunkt ist dabei häufig das Kriterium mit der größten Relevanz, um die Reparatur schnell durchführen und dem Kunden sein repariertes Fahrzeug 600 nach möglichst kurzer Zeit wieder zur Verfügung stellen zu können.

Die an den/die externen Server 800 übertragenen Daten können insbesondere die Artikelnummer und/oder den "Universally Unique Identifier" (UUID) der jeweilgen Komponente 630, 640 in einem oder mehreren Produktgruppierungssystemen umfassen.

Zusätzlich können der Name der Komponentenklasse und der Komponentenname im Klartext in der jeweiligen Landessprache des Katalogs des Lieferanten und/oder eine Erklärung der Teileinformationen übertragen werden, um es dem Lieferanten zu ermöglichen, auf Basis dieser Informationen passende Komponenten zu identifizieren.

Alternativ oder zusätzlich können Lieferanten-Daten aus einem oder mehreren Lieferanten-Servern 800 in regelmäßigen Abständen, z.B. nachts, von der Übertragungsvorrichtung 710 abgerufen und in einer zusätzlichen Speichervorrichtung 720 (Lieferanten-Speichervorrichtung), die Teil der Speichervorrichtung 100 oder eine separate Speichervorrichtung 720 sein kann, abgelegt werden, um der Komponenten-Bestellvorrichtung 700 im Betrieb einen schnellen Zugriff auf die Lieferanten-Daten zu ermöglichen, ohne für jede Anfrage eine Verbindung mit den Servern 800 der Lieferanten herstellen zu müssen. Auch können auf diese Weise Anfragen und/oder Bestellungen bei Lieferanten, die zu teuer sind und/oder die gewünschte Komponenten 630, 640 derzeit nicht liefen können, von vornherein vermieden werden.

Alternativ oder zusätzlich können die Lieferanten-Daten auch aktiv von den Lieferanten-Server 800 an die Übertragungsvorrichtung 710 und von dort in die zusätzliche Speichervorrichtung 720 übertragen werden ("Push-Service"), wenn Änderungen der Daten auf den Lieferanten-Servern 800 vorgenommen worden sind. Auf diese Weise wird erreicht, dass die in der zusätzlichen Speichervorrichtung 720 gespeicherten Daten stets auf dem aktuellsten Stand sind.

Die Figur 2 zeigt ein Ausführungsbeispiel eines erfindungsgemäßen Zuordnungsspeichers 330, in dem erste Fahrzeugidentifikatoren 331a, 332a eines ersten Fahrzeug-Identifizierungssystems, zweite Fahrzeugidentifikatoren 331b, 332b eines zweiten Fahrzeug-Identifizierungssystems, dritte Fahrzeugidentifikatoren 331c, 332c eines dritten Fahrzeug-Identifizierungssystems und vierte Fahrzeugidentifikatoren 331 d, 332d eines vierten Fahrzeug-Identifizierungssystems gespeichert sind. Die zweiten, dritten und vierten Fahrzeugidentifikatoren 331b, 332b, 331c, 332c, 331d, 332d die zu einem zweiten, dritten oder vierten Fahrzeug-Identifizierungssystem gehören, sind jeweils mit einem ersten Fahrzeugidentifikator 331a, 332a des ersten Fahrzeug-Identifizierungssystems verknüpft. Auf diese Weise wird durch die ersten Fahrzeugidentifikatoren 331 a, 332a auch eine Verknüpfung zwischen einander entsprechenden Fahrzeugidentifikatoren 331b, 332b, 331c, 332c, 331d, 332d des zweiten, dritten und vierten FahrzeugIdentifizierungssystems geschaffen.

Die Fahrzeugidentifikationsvergleichs- und auswahlvorrichtung 320 ist in diesem Ausführungsbeispiel ausgebildet, die von der Aufnahmevorrichtung 310 entgegen genommenen Eingangswerte mit den ersten Fahrzeugidentifikatoren 331 a, 332a zu vergleichen und diejenigen zweiten, dritten und/oder vierten Fahrzeugidentifikatoren 331b, 332b, 331 c, 332c, 331d, 332d auszuwählen, die mit einem ersten Fahrzeugidentifikator 331a, 332a verknüpft sind, der mit wenigstens einem der empfangenen Eingangswerte übereinstimmt. Durch die Verknüpfung der auf diese Weise ausgewählten ersten Fahrzeugidentifikatoren 331 a, 332a mit zweiten, dritten und/oder vierten Fahrzeugidentifikatoren 331 b, 332b, 331c, 332c, 331 d, 332d können die von der Aufnahmevorrichtung 310 empfangenen Eingangswerte in jedes Fahrzeug-Identifizierungssystem überführt und der Vergleichs- und Auswahlvorrichtung 200 zur Verfügung gestellt werden. Die Figur 3 zeigt ein weiteres Ausführungsbeispiel eines erfindungsgemäßen Zuordnungsspeichers 330, in dem Datensätze 331, 332 gespeichert sind, die jeweils mehrere Einträge 341a, 341b, 341c, 341 d, 342a, 342b, 342c, 342d umfassen.

Die Fahrzeugidentifikationsvergleichs- und auswahlvorrichtung 320 ist in diesem Ausführungsbeispiel ausgebildet, die von der Aufnahmevorrichtung 310 empfangenen Eingangswerte mit den Einträgen 341 a, 341 b, 341 c, 342a, 342b, 342c in den im Zuordnungsspeicher 330 gespeicherten Datensätzen 331, 332 zu vergleichen und diejenigen Datensätze 331, 332 auszuwählen, welche die meisten Einträge 341a, 341b, 341c, 342a, 342b, 342c enthalten, die mit den empfangenen Eingangswerten übereinstimmen. Wenigstens ein Eintrag 341 d, 342d aus den ausgewählten Datensätzen 331, 332 wird dann als Fahrzeugidentifikator zur Verfügung gestellt.

Mit einem derartigen Zuordnungsspeicher 330 ist es möglich, auf Grundlage individueller Merkmale des untersuchten Fahrzeugs 600 einen Fahrzeugidentifikator zur Identifikation des untersuchten Fahrzeugs 600 bereitzustellen, indem die von der Aufnahmevorrichtung 310 empfangene Eingangswerte, die einzelnen Merkmale des untersuchten Fahrzeugs, wie z.B. den Hersteller (Audi, VW, Honda), die Modellbezeichnung (A4, Golf, Civic) des Fahrzeugs, die Art des benötigten Kraftstoffs (insbesondere Diesel, Benzin, Gas, Strom), den Hubraum und/oder die Leistung des Motors bezeichnen, mit in den Einträgen 341 a, 341 b, 341c, 342a, 342b, 342c im Zuordnungsspeicher 330 abgelegten Merkmalen verglichen werden und der Datensatz 331, 332 ausgewählt wird, der die größte Übereinstimmung aufweist.

Dabei können auch Rundungsalgorithmen vorgesehen sein, um z.B. identische Hubräume trotz Abweichungen zwischen der nominellen Hubraumangabe (z.B. 2,0 Liter) und dem technischen Hubraum (z.B. 1,997 Liter) als Übereinstimmung zu erkennen.

Es kann auch wenigstens KO-Kriterium definiert werden, dessen Nicht-Erfüllung eine Auswahl des betreffenden Datensatzes 331, 332 trotz anderweitiger Übereinstimmungen ausschließt oder zumindest eine manuelle Bestätigung der Auswahl erfordert. Ein solches KO-Kriterium kann beispielsweise die vom Motor benötigte Kraftstoffart sein, so dass kein Datensatz für ein Benzin-Modell ausgewählt werden kann, wenn es sich bei dem untersuchten Fahrzeug 600 um ein Fahrzeug 600 mit Diesel-Motor handelt.

## Patentansprüche

1. Identifikationssystem (1), insbesondere zum Einsatz im Werkstattbereich, mit
a) wenigstens einer Speichervorrichtung (100), die zur Speicherung von Datensätzen (101, 102) ausgebildet ist, wobei jeder der Datensätze (101, 102) wenigstens ein erstes Identifikationselement (101a, 102a) und wenigstens ein zweites Identifikationselement (101b, 102b) umfasst;
b) wenigstens einer Diagnosevorrichtung (400), die ausgebildet ist, eine Untersuchung an einem Objekt (600), insbesondere einem Kraftfahrzeug, durchzuführen und als Ergebnis der Untersuchung wenigstens einen Diagnoseidentifikator bereitzustellen;
c) wenigstens einer Objektidentifikationsvorrichtung (300), die ausgebildet ist, das Objekt (600) zu identifizieren und einen dem identifizierten Objekt (600) zugeordneten Objektidentifikator bereitzustellen; und
d) einer Vergleichs- und Auswahlvorrichtung (200), die ausgebildet ist:
d1) den von der Objektidentifikationsvorrichtung bereitgestellten Objektidentifikator mit den ersten Identifikationselementen (101 a, 102a) der in der Datenbank (100) gespeicherten Datensätze (101, 102) zu vergleichen;
d2) den wenigstens einen von der Diagnosevorrichtung bereitgestellten Diagnoseidentifikator (410) mit den zweiten Identifikationselementen (101b, 102b) der in der Datenbank (100) gespeicherten Datensätze (101, 102) zu vergleichen; und
d3) diejenigen Datensätze (101, 102) auszuwählen, die
wenigstens ein erstes Identifikationselement (101 a, 102a) enthalten, das mit dem von der Objektidentifikationsvorrichtung zur Verfügung gestellten Objektidentifikator übereinstimmt, und die
wenigstens ein zweites Identifikationselement (101b, 102b) enthalten, das mit dem von der Diagnosevorrichtung zur Verfügung gestellten Diagnoseidentifikator (410) übereinstimmt.

2. Identifikationssystem (1) nach einem der vorangehenden Ansprüche, das zusätzlich wenigstens eine Übertragungsvorrichtung (710) aufweist, die ausgebildet ist, Daten aus wenigstens einem der von der Vergleichs- und Auswahlvorrichtung (200) ausgewählten Datensätze (101, 102) an wenigstens einen externen Server (800) zu übertragen, wobei das Identifikationssystem (1) insbesondere eine Übertragungs-Auslösevorrichtung (730) aufweist und die Übertragungsvorrichtung (710) so ausgebildet es, dass ein Übertragen von Daten aus den ausgewählten Datensätzen (101, 102) an den wenigstens einen externen Server (800) durch Betätigen der Übertragungs-Auslösevorrichtung (730) auslösbar ist.

3. Identifikationssystem (1) nach Anspruch 2, wobei die Übertragungsvorrichtung (700) ausgebildet ist, die Daten über das Internet (750), insbesondere unter Benutzung des http- oder https-Protokolls, an den wenigstens einen externen Server (800) zu übertragen.

4. Identifikationssystem (1) nach einem der Ansprüche 2 oder 3, wobei die Übertragungsvorrichtung (700) ausgebildet ist, Daten von wenigstens einem externen Server (800) abzurufen und in der Speichervorrichtung (100) und/oder einer zusätzlichen Speichervorrichtung (720) zu speichern.

5. Identifikationssystem (1) nach einem der vorangehenden Ansprüche, wobei die Objektidentifikationsvorrichtung (300) aufweist:
einen Zuordnungsspeicher (330), in dem erste Einträge (331a, 332a) und zweite Einträge (331 b, 332b) gespeichert sind, wobei jeder der zweiten Einträge (331 b, 332b) mit wenigstens einem ersten Eintrag (331a, 332a) verknüpft ist,
eine Aufnahmevorrichtung (310), die ausgebildet ist, Eingangswerte zu empfangen; und
eine Objektidentifikationsvergleichs- und auswahlvorrichtung (320), die ausgebildet ist, von der Aufnahmevorrichtung (310) empfangene Eingangswerte mit den ersten Einträgen (331 a, 332a) im Zuordnungsspeicher (330) zu vergleichen und zweite Einträge (331 b, 332b), die mit ersten Einträgen (331 a, 332a), die mit wenigstens einem der Eingangswerte übereinstimmen, verknüpft sind, auszuwählen und als Objektidentifikatoren zur Verfügung zu stellen.

6. Identifikationssystem (1) nach Anspruch 5,
wobei in dem Zuordnungsspeicher (330) zusätzlich zu den ersten und zweiten Einträgen (331a, 332a, 331b, 332b) dritte Einträge (331c, 332c) gespeichert sind, wobei jeder der ersten Einträge (331a, 332a) mit jeweils wenigstens einem der zweiten Einträge (331 b, 332b) und mit jeweils wenigstens einem der dritten Einträge (331c, 332c) verknüpft ist, und
wobei die Objektidentifikationsvergleichs- und auswahlvorrichtung (320) ausgebildet ist, die von der Aufnahmevorrichtung (310) empfangenen Eingangswerte mit den ersten Einträgen (331a, 332a) im Zuordnungsspeicher (330) zu vergleichen und zweite Einträge (331 b, 332b) und/oder dritte Einträge (331 c, 332c), die über wenigstens einen der ersten Einträge (331a, 332a) verknüpft sind, die mit wenigstens einem der Eingangswerte übereinstimmen, auszuwählen und als Objektidentifikatoren zur Verfügung zu stellen.

7. Identifikationssystem (1) nach einem der vorangehenden Ansprüche, wobei die Objektidentifikationsvorrichtung (300) aufweist:
einen Zuordnungsspeicher (330), in dem Datensätze (331, 332) mit Einträgen (341 a, 341 b, 341 c, 341 d, 342a, 342b, 342c, 342d) gespeichert sind,
eine Aufnahmevorrichtung (310), die ausgebildet ist, Eingangswerte zu empfangen; und
eine Objektidentifikationsvergleichs- und auswahlvorrichtung (320), die ausgebildet ist, von der Aufnahmevorrichtung (310) empfangene Eingangswerte mit den Einträgen (341a, 341b, 341c, 342a, 342b, 342c) in den im Zuordnungsspeicher (340) gespeicherten Datensätze (331, 332) zu vergleichen, diejenigen Datensätze (331, 332) auszuwählen, welche die meisten Einträge (341 a, 341 b, 341c, 342a, 342b, 342c) aufweisen, die mit den empfangenen Eingangswerten übereinstimmen, und wenigstens einen Eintrag (341d, 342d) aus den ausgewählten Datensätzen (331, 332) als Objektidentifikator zur Verfügung zu stellen.

8. Identifikationssystem (1) nach einem der Ansprüche 5 bis 7, wobei die Objektidentifikationsvorrichtung (300) ausgebildet ist, zusätzlich einen oder mehrere Eingangswerte anzufordern, wenn auf Grundlage der bereits vorhandenen Eingangswerte mehr als ein Datensatz (331, 332) ausgewählt worden ist.

9. Identifikationssystem (1) nach einem der vorangehenden Ansprüche, wobei die Speichervorrichtung (100) mehrere Speicher-Teilbereiche umfasst und die Vergleichs- und Auswahlvorrichtung (200) konfigurierbar ist, Datensätze (101, 102) nur aus einem oder mehreren der Speicher-Teilbereichen auszuwählen.

10. Identifikationssystem (1) nach einem der vorangehenden Ansprüche, das zusätzlich eine Ausgabe- und/oder Anzeigevorrichtung (420, 500) aufweist, die ausgebildet ist, Daten aus Datensätzen, die von der Vergleichs- und Auswahlvorrichtung (200) ausgewählt worden sind, anzuzeigen.

11. Identifikationssystem (1) nach einem der vorangehenden Ansprüche, das zusätzlich eine Eingabevorrichtung (430, 510) aufweist, die ausgebildet ist, wenigstens eine Eingabe eines Benutzers entgegenzunehmen.

12. Identifikationssystem (1) nach Anspruch 11, wobei die Vergleichs- und Auswahlvorrichtung (200) ausgebildet ist, auf Grundlage der Eingabe des Benutzers wenigstens einen aus mehreren zuvor von der Vergleichs- und Auswahlvorrichtung (200) ausgewählten Datensätzen (101, 102) auszuwählen.

13. Verfahren zum Auswählen von Daten aus einer Speichervorrichtung (100) eines Identifikationssystems (1), in der Datensätze (101, 102) gespeichert sind, wobei jeder der Datensätze (101, 102) wenigstens ein erstes Identifikationselement (101 a, 102a) und wenigstens ein zweites Identifikationselement (101b, 102b) umfasst, und
wobei das Verfahren die Schritte umfasst:
A) Durchführen einer Untersuchung an einem Objekt (600), insbesondere einem Kraftfahrzeug, und Bereitstellen wenigstens eines einem Ergebnis der Untersuchung zugeordneten Diagnoseidentifikators (410);
B) Identifizieren des Objekt (600) und Bereitstellen eines dem identifizierten Typ des Objekt (600) zugeordneten Objektidentifikators;
C1) Vergleichen des zur Verfügung gestellten Objektidentifikators mit den ersten Identifikationselementen (101a, 102a) der in der Datenbank (100) gespeicherten Datensätze (101, 102), und
C2) Vergleichen des wenigstens einen zur Verfügung gestellten Diagnoseidentifikators (410) mit den zweiten Identifikationselementen (101b, 102b) der in der Datenbank (100) gespeicherten Datensätze (101, 102) und
D) Auswählen von Datensätzen (101, 102), die
wenigstens ein erstes Identifikationselement (101a, 102a) enthalten, das mit dem zur Verfügung gestellten Objektidentifikator übereinstimmt, und die
wenigstens ein zweites Identifikationselement (101b, 102b) enthalten, das mit dem zur Verfügung gestellten Diagnoseidentifikator (410) übereinstimmt.

14. Verfahren nach Anspruch 13, das zusätzlich umfasst Daten aus den ausgewählten Datensätzen (101, 102) anzuzeigen und insbesondere wenigstens einen der angezeigten Datensätze (101, 102) manuell auszuwählen.

15. Verfahren nach Anspruch 13 oder 14, das zusätzlich umfasst, Daten aus wenigstens einem der von der Vergleichs- und Auswahlvorrichtung (200) ausgewählten Datensätze (101, 102) an wenigstens einen externen Server (800) zu übertragen.
